# EUROPEAN PATENT APPLICATION

(11) **EP 4 696 525 A1**
(43) Date of publication of application: **18.02.2026**
(21) Application number: 25195490.5
(22) Date of filing: 12.08.2025
(51) Int. Cl.: B60C 23/00, F16K 17/00

(54) **AUTOMATIC TIRE PRESSURE MANAGEMENT SYSTEMS AND METHODS**

(30) Priority: 14.08.2024 US 202418804657
(71) Applicant: ArvinMeritor Technology, LLC, Troy, MI 48084 (US)
(72) Inventor: Rodrigues, Paulo W., Troy, 48084 (US); Hackett, Bryan D., Troy, 48084 (US); Casagrande, Douglas Endrigo, Troy, 48084 (US); Mirji, Pradeep D., Troy, 48084 (US); Venugopala, Gopala, Troy, 48084 (US)
(74) Representative: Whitfield, Jack Stephen

(57) **Abstract**

A tire inflation assembly includes a housing that includes a fluid supply port and at least partially defining a fluid chamber in fluid communication with the fluid supply port. The tire inflation assembly further includes a first valve subassembly operatively connected to the housing and in fluid communication with the fluid chamber, wherein the first valve subassembly is configured to be operatively connected to and in fluid communication with a first tire. The first valve subassembly includes a first fluid valve and a second fluid valve each disposed between and in fluid communication with the fluid chamber and with the first tire. The first fluid valve is configured to open responsive to a pressure differential between the fluid chamber and the first tire, and the second fluid valve is configured to open responsive to pressure in the fluid chamber being greater than a first pressure threshold.

## Description

### Field

This application claims the benefit of priority of U.S. Patent Application No. 18/804,657, filed on August 14, 2024. The present disclosure relates generally to automatic tire inflation and deflation systems and, in particular, to such systems capable of providing pressure equalization between tires.

### Background

As known in the art, automatic tire inflation systems (ATIS) manage the inflation of tires deployed on various types of vehicles (e.g., on trucks and/or trailers). For example, many ATIS are capable of monitoring tires and causing pressurized fluid (e.g., normal air and/or other gaseous mixture from a pressurized fluid supply source) to be supplied to tires in the case of underinflation or to cause fluid within the tires to be released in the case of overinflation. Furthermore, some ATIS are capable of equalizing pressurization of the vehicles tires in which fluid from adequately pressurized tires is provided to under-inflated tires.

While ATIS offer substantial benefits to vehicle operators, further improvement would be desirable. For example, such ATIS may take a relatively long time to inflate underinflated tires. Further the control of such inflation operations is often too coarse such that overinflation of individual tires may result.

Furthermore, while the pressure equalization functionality in various ATIS is beneficial, negative effects of certain operating scenarios may actually be exacerbated by such equalization capabilities. For example, in the case of a "fast" leak in one of the tires (e.g., a blowout), the equalization feature may operate to attempt to equalize the pressure in the now underinflated tire via the remaining "good" tires. However, given the failure of that tire, the net effect of such equalization may be underinflation of the "good" tires, continuing use of which may cause damage to those remaining tires.

Thus, techniques that overcome shortcomings of exiting ATIS would be a welcome addition to the art.

### Summary

In one example implementation, a method for use with a tire inflation system may include but is not limited to defining, at least partially by a housing comprising a fluid supply port, a fluid chamber in fluid communication with the fluid supply port when in operation. A first valve subassembly may be connected to the housing, the first valve subassembly in fluid communication with the fluid chamber when in operation. The first valve subassembly may be connected to and in fluid communication with a first tire when in operation, wherein the first valve subassembly may include a first fluid valve and a second fluid valve each disposed between and in fluid communication with the fluid chamber and with the first tire when in operation. The first fluid valve may be configured to open responsive to a pressure differential between the fluid chamber and the first tire when in operation. The second fluid valve may be configured to open responsive to pressure in the fluid chamber being greater than a first pressure threshold when in operation.

One or more of the following example features may be included. Fluid flow may be provided from the fluid chamber to the first tire by the first fluid valve when a pressure differential between the fluid chamber and the first tire is greater than a differential threshold. The first fluid valve and the second fluid valve may be concentric. The first fluid valve may be deployed within the second fluid valve. A second valve subassembly may be connected to the housing, wherein the second valve subassembly may be in fluid communication with the fluid chamber when in operation. The second valve subassembly may be connected to and be in fluid communication with a second tire when in operation, wherein the second valve subassembly may include a third fluid valve and a fourth fluid valve each disposed between and in fluid communication with the fluid chamber and with the second tire when in operation. The third fluid valve may be configured to open responsive to a pressure differential between the fluid chamber and the second tire when in operation. The fourth fluid valve may be configured to open responsive to pressure in the fluid chamber being greater than a second pressure threshold when in operation. A fluid supply conduit may be arranged to be in fluid communication with the fluid chamber via the fluid supply port when in operation. A pressure sensor may be configured to obtain a current pressure from the fluid supply conduit. At least one system control valve may be configured to be in fluid communication with the fluid supply conduit and a fluid supply source. The at least one system control valve may be controlled to control fluid flow from the fluid supply source to the fluid chamber based upon pressure sensor data obtained from the pressure sensor. The at least one system control valve may be configured to control the fluid flow out of the fluid chamber based upon pressure sensor data obtained from the pressure sensor. The at least one system control valve may include an inflation valve disposed between the fluid supply source and the fluid supply conduit. The at least one system control valve may include an exhaust valve disposed between the fluid supply conduit and ambient. The exhaust valve may be de-energized upon receiving pressure sensor data below a second threshold. The at least one system control valve may include a deflation valve disposed between the fluid supply conduit and ambient.

In another example implementation, an apparatus may include but is not limited to a tire inflation assembly for use with a tire inflation system. The tire inflation assembly may include a housing that includes a fluid supply port and at least partially defining a fluid chamber in fluid communication with the fluid supply port. The tire inflation assembly may further include a first valve subassembly operatively connected to the housing and in fluid communication with the fluid chamber, wherein the first valve subassembly may be configured to be operatively connected to and in fluid communication with a first tire. The first valve subassembly may include a first fluid valve and a second fluid valve each disposed between and in fluid communication with the fluid chamber and with the first tire. The first fluid valve may be configured to open responsive to a pressure differential between the fluid chamber and the first tire, and the second fluid valve may be configured to open responsive to pressure in the fluid chamber being greater than a first pressure threshold.

One or more of the following example features may be included. Fluid flow from the fluid chamber to the first tire may be provided by the first fluid valve when a pressure differential between the fluid chamber and the first tire is greater than a differential threshold. The first fluid valve and the second fluid valve may be concentric. The first fluid valve may be deployed within the second fluid valve. The tire inflation assembly may further include a second valve subassembly operatively connected to the housing and in fluid communication with the fluid chamber, wherein the second valve subassembly may be configured to be operatively connected to and in fluid communication with a second tire, wherein the second valve subassembly may include a third fluid valve and a fourth fluid valve each disposed between and in fluid communication with the fluid chamber and with the second tire, wherein the third fluid valve may be configured to open responsive to a pressure differential between the fluid chamber and the second tire, and wherein the fourth fluid valve may be configured to open responsive to pressure in the fluid chamber being greater than a second pressure threshold. The tire inflation assembly may further include a fluid supply conduit in fluid communication with the fluid chamber via the fluid supply port, a pressure sensor in fluid communication with the fluid supply conduit, at least one system control valve in fluid communication with the fluid supply conduit and a fluid supply source. A controller operatively connected to the at least one system control valve may be configured to control, via the at least one system control valve, fluid flow from the fluid supply source to the fluid chamber, and fluid flow out of the fluid chamber, based upon pressure sensor data received from the pressure sensor. The at least one system control valve may include an inflation valve disposed between the fluid supply source and the fluid supply conduit. The at least one system control valve may include an exhaust valve disposed between the fluid supply conduit and ambient. The exhaust valve may be configured to de-energize upon receiving pressure sensor data below a second threshold. The at least one system control valve may include a deflation valve disposed between the fluid supply conduit and ambient.

The details of one or more example implementations are set forth in the accompanying drawings and the description below. Other possible example features and/or possible example advantages will become apparent from the description, the drawings, and the claims. Some implementations may not have those possible example features and/or possible example advantages, and such possible example features and/or possible example advantages may not necessarily be required of some implementations.

### Brief Description of Drawings

Fig. 1 is an overhead view of a vehicle having multiple axles, corresponding tires and an automatic tire inflation system to which teachings of the instant disclosure may be beneficially applied;
Fig. 2 is partial cross-sectional and schematic view illustrating further details of an axle and dual tire arrangement including components of an automatic tire inflation system to which teachings of the instant disclosure may be beneficially applied;
Fig. 3 is an example diagrammatic view of a first embodiment of a valve subassembly for use in a tire inflation assembly according to one or more example implementations of the instant disclosure;
Figs. 4A-4D are example diagrammatic views of a second embodiment of a valve subassembly for use in a tire inflation assembly according to one or more example implementations of the instant disclosure;
Fig. 5 is an example diagrammatic view of a tire inflation assembly for use in a tire inflation system according to one or more example implementations of the instant disclosure;
Fig. 6 is an example diagrammatic view illustrating setup of the tire inflation assembly according to one or more example implementations of the instant disclosure;
Fig. 7 is an example diagrammatic view illustrating a first phase of a status mode of the tire inflation assembly according to one or more example implementations of the instant disclosure;
Fig. 8 is an is a graph illustrating examples of pressure pulses applied to the tire inflation assembly during the initialization mode;
Fig. 9 is an example diagrammatic view of a fast inflation mode of the tire inflation assembly according to one or more example implementations of the instant disclosure;
Figs. 10A and 10B are example diagrammatic views of a slow inflation mode of the tire inflation assembly according to one or more example implementations of the instant disclosure;
Fig. 11 is an example diagrammatic view of equalization operation during a monitoring mode of the tire inflation system according to one or more example implementations of the instant disclosure;
Fig. 12 is an example diagrammatic view of a deflation mode of the tire inflation system according to one or more example implementations of the instant disclosure;
Fig. 13 is an example diagrammatic view of operation of the tire inflation system according to one or more example implementations of the instant disclosure during a large leak scenario;
Fig. 14 is an example diagrammatic view of a shutdown mode of the tire inflation system according to one or more example implementations of the instant disclosure; and
Fig. 15 is an example flowchart for at least part of a tire inflation system according to one or more example implementations of the disclosure.

Like reference symbols in the various drawings may indicate like elements.

### Description

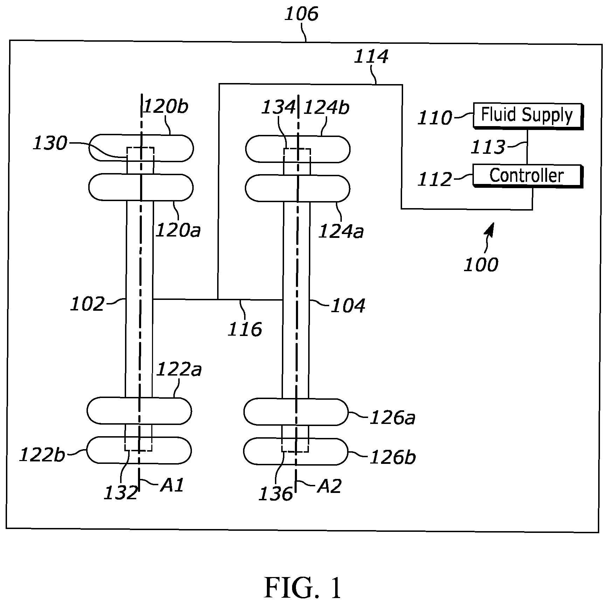

A typical configuration of a vehicle incorporating an automatic tire inflation system (ATIS) 100 is illustrated in Fig. 1. In particular, the ATIS 100 is deployed, in this example, in a trailer 106 of the type typically coupled to a truck or tractor as known in the art. As shown, the trailer 106 includes a first non-drive axle 102 and a second non-drive axle 104 that are typically positioned near a rear end portion of a trailer 16. A front end of the trailer 106 is typically supported on a tractor (not shown) as is known in the art. While only two non-drive axles 102, 104 are shown, it is understood that additional or fewer non-drive axles could be used to support the trailer 16.

The ATIS 100 includes a fluid supply tank 110, a controller 112 in fluid communication with the fluid supply tank 110 via a first connection 113, and a second connection 114 that extends to the first 102 and second 104 non-drive axles. While the ATIS 100 is shown as being used on non-drive trailer axles, it is understood that the ATIS 100 could also be used for drive or non-drive axles for a tractor or other similar vehicles (e.g., light, medium or heavy duty trucks, buses, etc.). Further, the fluid supply tank 110 is typically an air tank that is used for the trailer brake and/or suspension system. Optionally, a separate fluid supply tank could be included on the trailer 106.

Typically, the first 102 and second 104 non-drive axles each include an axle housing that defines a sealed inner cavity. The second connection 114 includes a first portion 116 that is in fluid communication with the sealed inner cavity of the first non-drive axle 102 and with the sealed inner cavity of the second non-drive axle 104.

The first non-drive axle 102 defines a first lateral axis of rotation A1, and includes a first set of wheels 120a, 120b positioned at one end of the axle 102 and a second set of wheels 122a, 122b laterally spaced from the first set of wheels 120a, 120b at an opposite end of the axle 102. Similarly, the second non-drive axle 104 defines a second lateral axis of rotation A2, and includes a first set of wheels 124a, 124b positioned at one end of the axle 104 and a second set of wheels 126a, 126b laterally spaced from the first set of wheels 124a, 124b at an opposite end of the axle 104. Although each of the first 120, 124 and second 122, 126 sets of wheels are illustrated comprising two tires per set, it is appreciated that this is not a requirement. For example, the first 124 and second 126 sets of tires on the second non-drive axle 104 could instead comprise only a single tire.

In the illustrated example, tire inflation assemblies 130, 132, 134, 136 are deployed at respective ends of each axle 102, 104. The tire inflation assemblies 130, 132, 134, 136 are in fluid communication with the fluid supply 110 via the controller 112 (which, in this example, may comprise a suitable fluid flow control device such as a solenoid operating under the guidance of, as a further example, a processing device, not shown), the noted connections 113, 114, 116 as well as further connections, deployed within the axles 102, 104, between the first portion 116 and each tire inflation assembly 130, 132, 134, 136. Although tire inflation assemblies 130, 132, 134, 136 are provided for each set 120, 122, 124, 126 of tires illustrated in Fig. 1, it is appreciated that this is not a requirement. In another embodiment, rather than the first and second axles 102, 104 having sealed inner cavities used to convey fluid to the tire inflation assemblies 130, 132, 134, 136, the inner cavities may not be made to be fluid-tight and, instead, fluid is provided to the tire inflation assemblies 130, 132, 134, 136 via suitable fluid-tight conduits running through the inner cavities of the axles 102, 104.

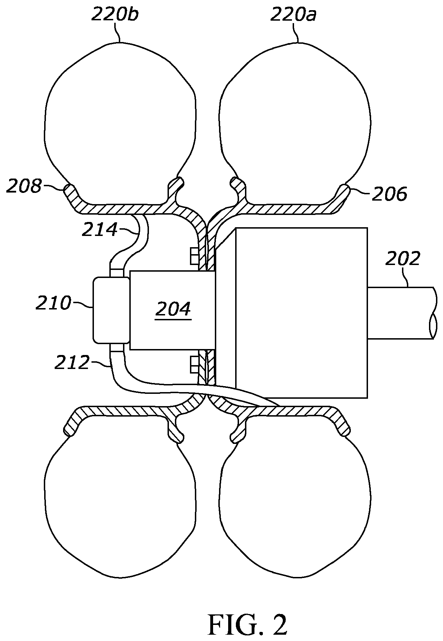

Referring now to Fig. 2, further details of an axle and dual tire arrangement, including components of an ATIS to which teachings of the instant disclosure may be beneficially applied, are illustrated. Fig. 2 shows an axle 202 on which is mounted a hub 204. Although the hub 204 illustrated in Fig. 2 is a non-steering hub, it is appreciated that a hub capable of providing steering functionality may be equally employed. The hub 204 has a tire inflation assembly 210 operatively connected thereto, for example, mechanically supported by the hub 204 and in fluid communication with fluid connections (not shown) deployed via the hub 204 and axle 202, as known in the art. As further known in the art, the hub 204 is configured to have rims 206, 208 mounted thereon, e.g., via bolts and lug nuts, where the rims 206, 208 are further configured to support tires 220a, 220b. Using fittings known in the art, the tire inflation assembly 210, in this example, has fluid connections 212, 214 to an inboard tire 220a and outboard tire 220b, respectively. Once again, although two tires 220a, 220b are illustrated in Fig. 2, this is not a requirement. As described in greater detail below, the tire inflation assembly 210 may comprise one or more valve subassemblies that facilitate various beneficial operations in accordance with the instant disclosure. In particular, valve subassemblies in accordance with the instant disclosure comprise a first fluid valve and a second fluid valve, where the first fluid valve is configured to open responsive to a pressure differential relative to fluid pressure in a tire and the second fluid valve is configured to open responsive to pressure in a fluid chamber, fluidically opposite the tire relative to the valve subassembly, being greater than a pressure threshold

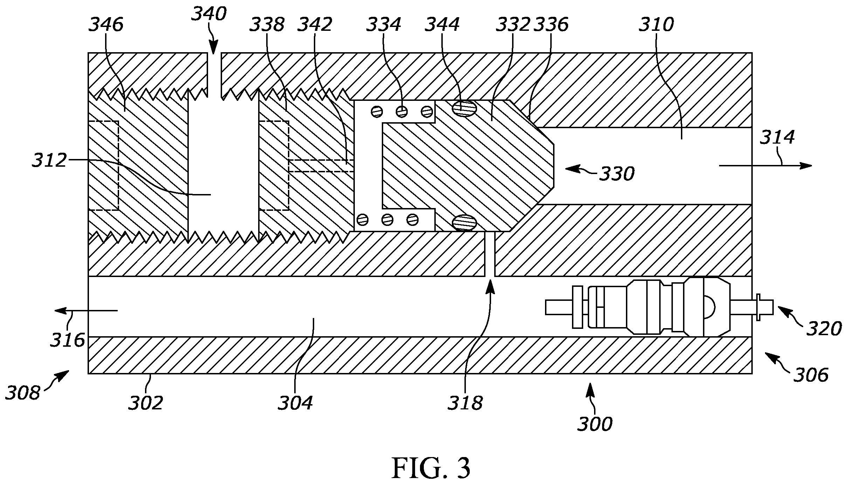

Referring now to Fig. 3, an embodiment of a valve subassembly 300 in accordance with the instant disclosure is illustrated. In this embodiment, a valve subassembly housing 302 is provided and has a first bore 304 passing therethrough to establish fluid communication from a first end 306 to a second end 308 of the housing 302. A second bore 310 is formed in fluid communication with a counterbore 312, where the second bore 310 and counterbore 312 are preferably concentric with each other. As described in greater detail below, the first end 306 of the subassembly housing 302 (and an open end of the second bore 310) is configured to face toward a fluid chamber of a tire inflation assembly (as illustrated by direction arrow 314), whereas the second end 308 of the subassembly housing 302 (and an open end of the first bore 304) is configured to face toward a tire operatively connected to the tire inflation assembly (as illustrated by direction arrow 316).

Furthermore, the bores 304, 310, 312 are formed such that a longitudinal axis of the first bore 304 and a longitudinal axis of the second bore 310 and counterbore 312 are separated and apart from each other, and such that no fluid communication is provided between the first bore 304 and the second bore 310/counterbore 312 with the exception of a control orifice 318 that provides fluid communication between the first bore 304 and the counterbore 312. In an embodiment, the control orifice 318 is configured to restrict fluid flow therethrough in order to ensure slow filling/deflation as described in further detail below.

As further shown in FIG. 3, the valve subassembly 300 comprises a first fluid valve 320 and a second fluid valve 330. In particular, the first fluid valve 320 is disposed in the first bore 304 and is configured as a one-way valve such that it controls fluid flow through the first bore 304 from the first end 306 to the second end 308, whereas the second fluid valve 330 is disposed in the counterbore 312 and is configured as a two-way valve such that it controls fluid from the second bore 330, through the control orifice 318 and the first bore 304 and vice versa.

In an embodiment, a longitudinal axis of the first fluid valve 320 is substantially parallel (i.e., to within manufacturing tolerances) to a longitudinal axis of the second fluid valve 330. However, it is appreciated that this is not a requirement and the respective longitudinal axes of the first and second fluid valves 320, 330 could form a non-zero angle therebetween. Further still, while it may be preferable in some embodiments for the longitudinal axes of the first and second fluid valves 320, 330 to be co-planar (whether parallel to each other or with a non-zero angle therebetween), this is also not a requirement.

The first fluid valve 320 is a normally-closed valve and, as noted above, is further configured to open based on a pressure differential across the first fluid valve 320, i.e., based on a difference in fluid pressure impinging upon the first fluid valve 320 from the direction arrow 314 of the fluid chamber and fluid pressure impinging upon the first fluid valve 320 from the direction arrow 316 of the corresponding tire. For example, the first fluid valve 320, which may be implemented as a Schrader valve or other type of spring-biased poppet valve as known in the art, may be configured such that it opens only when the pressure impinging upon the first fluid valve 320 from the first end 306 (P_line) is at least 3 PSI (pounds per square inch) greater than the pressure impinging upon the first fluid valve 320 from the second end 308 (P_tire). Those skilled in the art will appreciate that a value of the pressure differential threshold greater than or lesser than 3 PSI may be equally employed as a matter of design choice.

The second fluid valve 330 is also a normally-closed valve and, in the illustrated embodiment, comprises a second valve piston 332 that is biased by a second valve spring 334 into sealing contact with a second valve seat 336 formed at the interface of the second bore 310 and the counterbore 312. Although not shown in Fig. 3, one or more sealing elements (such a O-rings or the like) may be provided between the second valve piston 332 and the second valve seat 336 in order to fluidically isolate the second bore 310 and the first bore 304 when the second fluid valve 330 is in it normally-closed state.

A portion of the counterbore 312 may be configured for threaded engagement with an adjustable valve spring seat 338 such that a preload placed by the second valve spring 334 on the second valve piston 332 may be selectable. Alternatively, the spring seat 338 may not be adjustable. For example, in an embodiment, the preload of the second valve spring 334 may be adjusted/set such that the cracking pressure (P_crack) of the second fluid valve 330 (i.e., the pressure from the direction arrow 314 of the fluid chamber at which the second valve piston 332 will lift off of the second valve seat 336) is set to a desired pressure threshold, such as 80 PSI. Once again, it is appreciated that the pressure threshold for the second fluid valve 330 may be selected as a matter of design choice.

As further shown, the counterbore 312 may have a drain 340 formed in a wall defining the counterbore 312, thereby providing fluid communication between that portion of the counterbore 312 opposite the second valve piston 332 and ambient environment. Further, the adjustable valve spring seat 338 may comprise a drain passage 342 formed therein such that those spaces on either side of the adjustable valve spring seat 338 are maintained at ambient pressure, thereby ensuring that the cracking pressure of the second fluid valve 330 is determined solely by the second valve spring 334. One or more O-rings 344 or similar sealing structures may be provided to ensure fluid-tight seals such that fluid traversing the first and second bores 304, 310 via the control orifice 318 is isolated from ambient pressure.

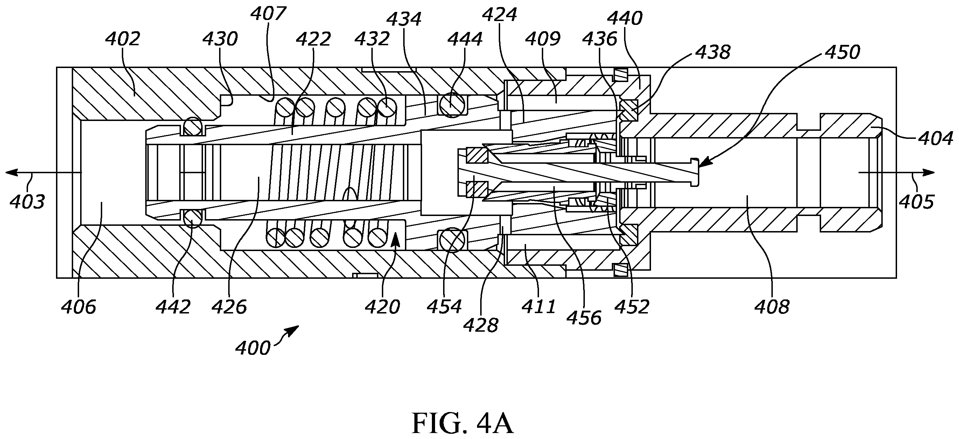

Referring now to Figs. 4A-4D, another embodiment of a valve subassembly 400 in accordance with the instant disclosure is illustrated. In this embodiment, a first valve subassembly housing 402 and a second valve subassembly housing 404 are provided and configured to be attached to each other (e.g., via complementary threading or press fitting) thereby providing a unitary subassembly housing. It is appreciated that subassembly housing could instead be formed as a single, integral unit. The first valve subassembly housing 402 comprises a first longitudinally-extending bore 406 formed therein, open in a direction 403 toward a tire, and extending along the entire length of the first valve subassembly housing 402. Similarly, the second valve subassembly housing 404 comprises a second longitudinally-extending bore 408 formed therein, open in a direction toward a fluid chamber of the tire inflation assembly, and extending along the entire length of the second valve subassembly housing 404. In this embodiment, engagement of the first and second valve subassembly housings 402, 404 places the first and second bores 406, 408 in fluid communication with each other. However, unlike the first and second bores 304, 310 shown in Fig. 3, the first and second bores 406, 408 are configured to be in concentric relationship to each other.

As further shown in Figs. 4A-4D, the valve subassembly 400 further comprises a second fluid valve 420 disposed in the first bore 406. The second fluid valve 420 has a first body portion 422 and an second body portion 424. A longitudinally-extending second fluid valve bore 426 is formed within and extends along the entire lengths of the first and second and second body portions 422, 424. Further, the first and second body portions 422, 424 are delineated from each other by one or more radially-extending orifices 428 that provide fluid communication between the second fluid valve bore 426 and the exterior of the first and second body portions 422, 424. As shown, the first bore 406 comprises a counterbore 407 that forms a spring seat 430. A valve spring 432 is disposed in contact with the spring seat 430 at one end thereof, and engages, at another end thereof, a shoulder 434 formed in the first body portion 422 such that the second fluid valve 420 is continuously biased toward the second valve subassembly housing 404.

The second body portion 424 further comprises a sealing interface 436 formed at a proximal end (relative to the second valve subassembly housing 404) of the first valve subassembly housing 402. The sealing interface 436 is configured to engage with an opposing O-ring seal 438 disposed within a shoulder 440 formed in the second valve subassembly housing 404. As known in the art, the O-ring seal 438 may be made from a suitably compliant material such as a rubber or polymer material. On the other hand, the sealing interface 436 may comprise an annular, longitudinally-projecting or similar feature configured to impinge upon the O-ring seal 438, thereby providing a fluid-tight seal around the entirety of the sealing interface 436.

An exterior surface of the second body portion 424 is configured to have a diameter less than the interior diameter of a counterbore portion 409 of the second valve subassembly housing 404. This results in the formation of an annular passage 411 between the exterior surface of the second body portion 424 and the interior diameter of the counterbore portion 409 of the second valve subassembly housing 404. The configuration of the radially-extending orifices 428 is such that they are in fluid communication with the annular passage 411. Further additional sealing structures may be provided in the form of O-rings 442, 444 or other similar sealing mechanisms supported by the first body portion 422. In this manner, any fluid flowing through the annular passage 411 is prevented from flowing anywhere else other than the orifices 428 or past the sealing interface 436 (when opened).

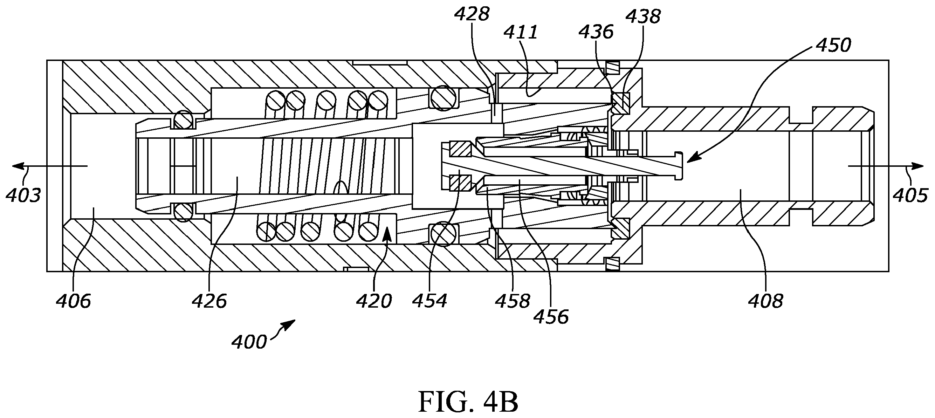

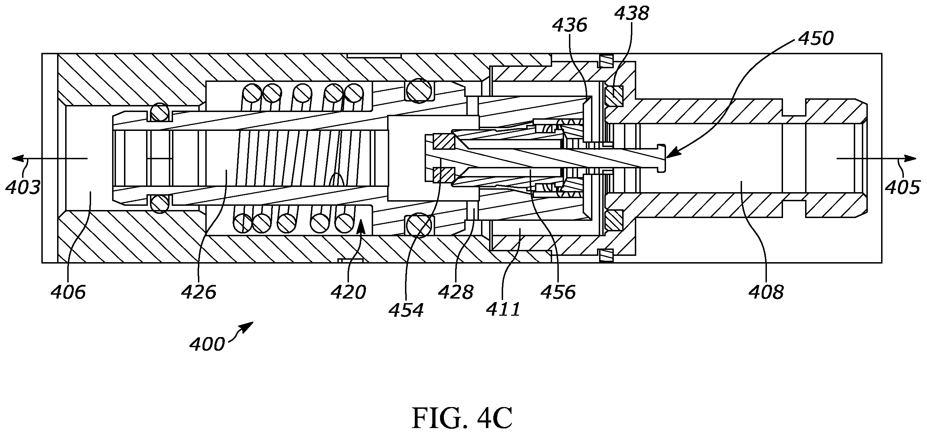

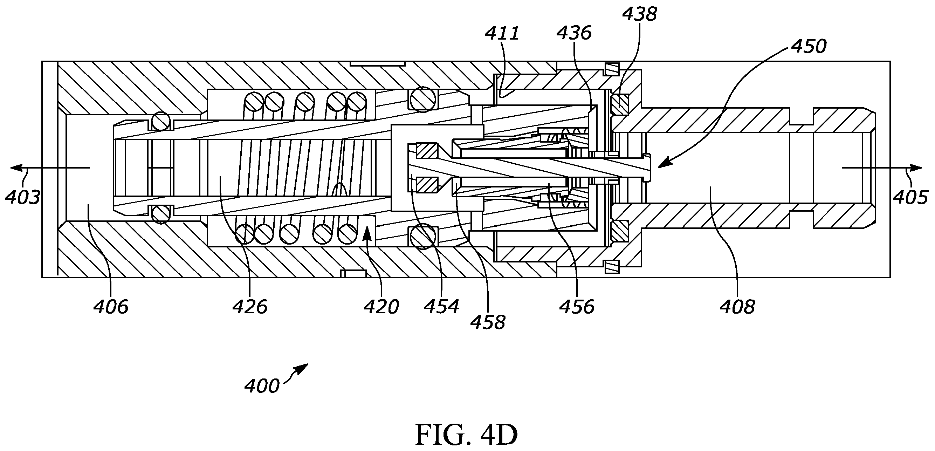

A first fluid valve 450 is disposed within the second fluid valve bore 426, primarily within the second body portion 424, as shown. Similar to the first embodiment illustrated in Fig. 3, the first fluid valve 450 may comprise a spring-biased poppet type valve such as a Schrader valve. As shown, the first fluid valve 450 is preferably concentrically aligned with the second fluid valve 420. In this manner, the valve subassembly 400 depicted in Fig. 4 may have a smaller overall cross-sectional area as compared to the valve subassembly 300 depicted in Fig. 3. The first fluid valve 450 depicted in Fig. 4 is a Schrader valve comprising a tube-like first fluid valve housing 452 configured for threaded engagement with the second fluid valve bore 426. A channel 456 is formed within the first fluid valve housing 452 and is configured to provide fluid communication between the first and second bores 406, 408 (via the second fluid valve bore 426). A poppet valve 454 is disposed within the channel 456 and is normally biased by a bias spring (not shown) into contact with a valve seat 458 (Fig. 4B), thereby providing a fluid-tight seal and preventing fluid communication between the first and second bores 406, 408.

As depicted in Fig. 4A, the first fluid valve 450 and second fluid valve 420 are both in their closed positions. This would be the case, for example, where a pressure differential between the pressure applied to the valve subassembly 400 from the direction 405 of the fluid chamber and the pressure applied to the valve subassembly from the direction 403 of the tire is less than a pressure differential threshold, e.g., 3 PSI. As a result of this condition, the first fluid valve 450 remains closed. Concurrently, if the pressure from the direction 405 of the fluid chamber is less than the cracking pressure of the second fluid valve 420 (e.g., 80 PSI), then the second fluid valve 420 also remains closed.

Fig. 4B illustrates the scenario in which the pressure differential across the first fluid valve 450 is greater than or equal to the pressure differential threshold, and the pressure from the direction 405 of the fluid chamber is less than the cracking pressure of the second fluid valve 420. In this case, the first fluid valve 450 is opened such that fluid is able to flow from the second bore 408 into the channel 456, past the interface of the poppet valve 454 and valve seat 458 and into the second fluid valve bore 426 and second bore 406. Because the second fluid valve 420 remains closed, fluid is not permitted to flow past the sealing interface 436 and O-ring seal 438 or through the passage 411.

Fig. 4C illustrates the scenario in which the pressure differential across the first fluid valve 450 is less than the pressure differential threshold, and the pressure from the direction 405 of the fluid chamber is greater than or equal to the cracking pressure of the second fluid valve 420. In this case, the first fluid valve 450 is closed thereby preventing fluid flow through the channel 456. On the other hand, the second fluid valve 420 is opened and fluid is permitted to flow past the sealing interface 436 and O-ring seal 438, into the passage 411 and orifices 428 and thereafter through the second fluid valve bore 426 and second bore 406.

Fig. 4D illustrates the scenario in which the pressure differential across the first fluid valve 450 is greater than or equal to the pressure differential threshold, and the pressure from the direction 405 of the fluid chamber is greater than or equal to the cracking pressure of the second fluid valve 420. In this case, the first fluid valve 450 is opened such that fluid is able to flow from the second bore 408 into the channel 456, past the interface of the poppet valve 454 and valve seat 458 and into the second fluid valve bore 426 and second bore 406. Additionally, the second fluid valve 420 is opened and fluid is permitted to flow past the sealing interface 436 and O-ring seal 438, into the passage 411 and orifices 428 and thereafter through the second fluid valve bore 426 and second bore 406.

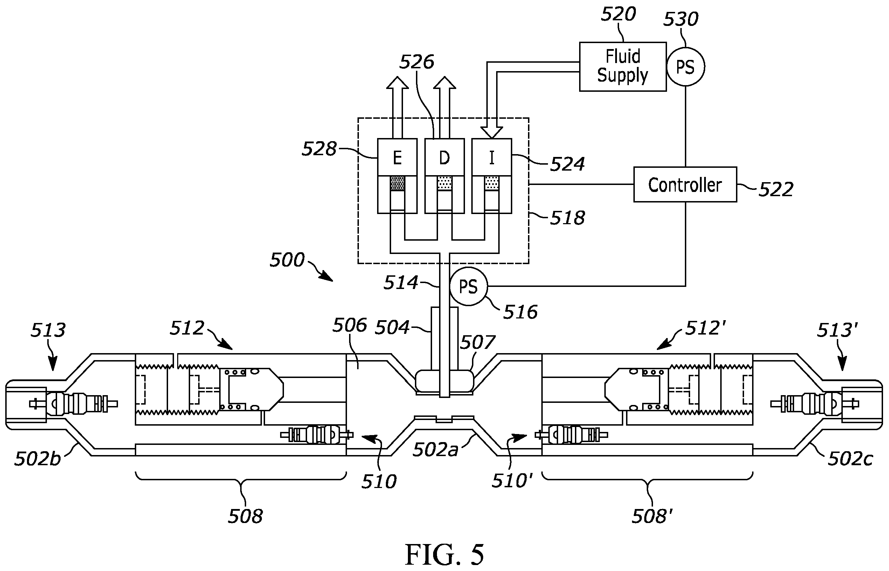

Referring now to Fig. 5, a tire inflation assembly 500 for use with a tire inflation system includes a housing 502 that comprises a fluid supply port 504 and at least partially defining a fluid chamber 506 in fluid communication with the fluid supply port 504. The fluid supply port 504 is preferably coupled to the housing 502 via a rotary union 507, as known in the art, which permits fluid-tight communication between the fluid supply port 504 and the fluid chamber 506 despite relative rotation of the housing 502.

The tire inflation assembly 100 may further include a first valve subassembly 508 operatively connected to the housing 502 and in fluid communication with fluid chamber 506. For example, in the illustrated embodiment, the first valve subassembly 508 may comprise the valve subassembly 300 depicted in Fig. 3, though it is appreciated that other valve subassemblies, such as the valve subassembly 400 depicted in Figs. 4A-4D, could be equally employed provided they operate in accordance with the valve subassemblies described herein. In an embodiment, the housing 502 may comprise suitable fittings or surfaces (e.g., threading) that permit the first valve subassembly 508 to be operatively coupled to the housing 502. For example, in the embodiment illustrated in Fig. 5, the housing 502 comprises a central housing body 502a (having the fluid supply port 504 deployed thereon) and a first lateral housing body 502b, where the first valve subassembly 508 is operatively connected to the central and first lateral housing bodies 502a, 502b. Alternatively, the housing 502 may comprise an integral, unitary body with suitable openings permitting insertion of the first valve subassembly 508 as a single, replaceable unit into the housing 502.

Regardless, the first valve subassembly 508 includes a first fluid valve 510 and a second fluid valve 512 each disposed between and in fluid communication with the fluid chamber 506 and with a first tire (not shown). As described above, the first fluid valve 510 is configured to assume an open or closed state based on a fluid pressure differential across the first fluid valve 510, whereas the second fluid valve 512 is configured to assume an open or closed state based on the fluid pressure within the fluid chamber 506, i.e., without consideration of fluid pressure within an associated tire. Furthermore, the housing 502, more specifically the first lateral housing body 502b, may support a first sealing valve 513, which may also comprise a Schrader valve that is, at a first end thereof, in fluid communication with the first bore in which the first fluid valve 510 is disposed, and that is, at a second end thereof, configured for fluid communication with a tire (via, for example, a fluid connection 212, 214 as depicted in FIG. 2). In an embodiment, the first sealing valve 513 is configured to be opened via mechanical action, such as the connection of a suitable fitting configured to open the poppet valve of the first sealing valve 513.

Fig. 5 also shows a fluid supply conduit 514 in fluid communication with the fluid chamber 506 via the fluid supply port 504. In turn, the fluid supply conduit 514, which may be deployed at least partly within an axle, wheel hub, etc. as described above relative to Figs. 1 and 2) is in fluidic communication with one or more system control valves 518 used to control operation of the tire inflation assembly 500. Such control valves may comprise electronically controlled solenoid valves, as known in the art, operating under the control of a controller 522 (described in further detail below). In the illustrated example, the system control valves 518 comprise an inflation valve 524, a deflation valve 526 and an exhaust valve 518, all in fluid communication with the fluid supply conduit 514. A fluid supply conduit pressure sensor 516 is operatively connected to the fluid supply conduit 514 and is configured, in accordance with known techniques, to measure fluid pressure within the fluid supply conduit 514 and, by inference, the fluid chamber 506. A fluid supply source 520 is provided in fluid communication with the inflation valve 524. A supply source pressure sensor 530 may be operatively connected to the fluid supply source 520 and configured, in accordance with known techniques, to measure fluid pressure with the fluid supply source 520. The fluid supply source 520 may comprise a constantly pressurized fluid vessel, such as a fluid reservoir used for operation of a vehicle's suspension system or may comprises a separate, pressurized source used solely for the purpose of a tire inflation system.

In the illustrated embodiment, both the deflation valve 526 and the exhaust valve 528 are coupled to ambient environment. In an embodiment, the deflation valve 526 comprises a smaller fluid passage than the exhaust valve 528 such that the deflation valve 526 provides slower, and therefore more precisely controlled, evacuation of the fluid chamber 506. Furthermore, the inflation and deflation valves 524, 526 may comprise normally-off (or normally-closed) valves, whereas the exhaust valve 528 may comprise a normally-on (or normally-open) valve. That is, when the system valves 518 are not actively controlled by the controller 522 (as in the case, for example, where the vehicle comprising or connected to the tire inflation assembly 500 is powered down), the intake and deflation valves 524, 526 will default to a closed position such that the fluid supply conduit 514 is not in fluidic communication with the fluid supply source 520 or the ambient environment via the deflation valve 526. On the other hand, when the system valves 518 are not actively controlled by the controller 522, the exhaust valve 528 will default to an open position such that the fluid supply conduit 514 is in fluidic communication with the ambient environment via the exhaust valve 528. As a result, the fluid supply conduit 514 and the fluid chamber 506 are not pressurized above ambient pressure in this default state.

It will be appreciated after reading the present disclosure that the at least one system control valve 518 may include more or less valves than those illustrated without departing from the scope of the present disclosure. As such, the use of three valves 524, 526, 528 should be taken as example only and not to otherwise limit the scope of the present disclosure.

As noted above, the controller 522 is operatively connected to the at least one system control valve 518 and may be configured to control, via the at least one system control valve 518, fluid flow from the fluid supply source 520 to the fluid chamber 506, and fluid flow out of the fluid chamber 506, based upon pressure sensor data received from the fluid supply conduit pressure sensor 516. For instance, the controller 522 may comprise an electronic control unit (ECU) as known in the art or, more generally, any configurable and processing-capable device (e.g., a microcontroller, digital signal processor, application specific integrated circuit (ASIC) or combinations thereof) as known in the art. Thus, as described in greater detail below, the system control valves 518 are operated, via the controller 522 and based on data captured by the fluid supply conduit pressure sensor 516, to either inflate/deflate tires, or vent out the tire inflation assembly 500 entirely while still maintaining tire pressures. For example, the controller 522 may cause the inflation valve 524 to open thereby allowing fluid to flow from the fluid supply source 520, through the fluid supply conduit 514 and the fluid supply port 504 into the fluid chamber 506. Alternative, the controller 522 may cause the exhaust valve 526 and/or deflation valve 528 to open thereby deflating the tire(s) by allowing fluid to flow from fluid chamber 506 through fluid supply port 504 and fluid supply conduit 514 out the valves of exhaust valve 526 and/or deflation valve 528.

While the tire inflation assembly 500 may operate using only a single valve subassembly 508 in conjunction with a single tire, in a presently preferred embodiment, the tire inflation assembly 500 comprises at least a second valve subassembly 508', configured for operation with another tire, that comprises components and features (identified by identical reference numerals modified by a prime mark) as the first valve subassembly 508. Thus, tire inflation assembly 500 may further include a second valve subassembly 508' operatively connected to the housing 502 and in fluid communication with the fluid chamber 506. The second valve subassembly 108' may include a third fluid valve 510' and a fourth fluid valve 512' each disposed between and in fluid communication with the fluid chamber 506 and with a second tire (not shown). Likewise, a second sealing valve 513' is supported by a second lateral housing body 502c (functionally identical to the first lateral housing body 502b) and configured for fluid communication with a second tire via a suitable fluid connection. Both the third and fourth fluid valves 510', 512' operate in the same manner as the first and second fluid valves 510, 512 and are preferably configured in the same manner, i.e., operate according to the same pressure differential threshold, in the case of the first and third fluid valves 510, 510', or pressure threshold, in the case of the second and further fluid valves 512, 512'.

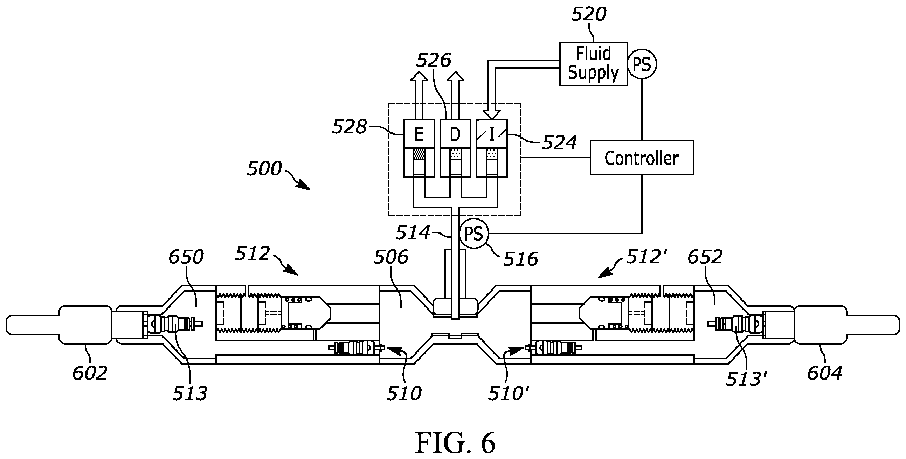

Referring at least to the example implementations of Figs. 6-14, various example operational modes of the tire inflation assembly 500 are shown. Fig. 6 shows an example of setup mode where first and second tires (not shown) are fluidically connected, as represented by respective first and second fluid connectors 602, 604, while the tire inflation system is inactive as may be the case where the vehicle comprising the tires is first commissioned or shutdown. In this state, the system control valves 524, 526, 528 are in their defaults states, i.e., the inflation and deflation valves 524, 526 are closed and the exhaust valve 528 is open. Consequently, the fluid chamber 506 is unpressurized relative to ambient.

In the example, when the first and second tires are connected, the respective first and second sealing valves 513, 513' to the tires are opened by mechanical interaction as described above, such that fluid pressure in the first and second tires will pressurize the respective first and second chambers 650, 652. It is noted that the first and second chambers 650, 652 are isolated at this time from the fluid chamber 506 by virtue of the first, second, third and fourth fluid valves 510, 512, 510', 512' being closed. This is because the pressure differential across the first and third fluid valves 510, 510' will actually be negative because the fluid chamber 506 is unpressurized whereas the first and second chambers 650, 652 are pressurized (presumably to a level higher than atmospheric pressure), and because the unpressurized state of the fluid chamber 506 does not exceed the pressure threshold for the second and fourth fluid valves 512, 512'.

For purpose of illustration, it is assumed throughout the instant disclosure that the fluid pressure maintained in the fluid supply source 520 is 110 PSI. It is additionally assumed that the first and third fluid valves 510, 510' operate based on a 3 PSI pressure differential threshold, i.e., the first and third fluid valves 510, 510' will remain in their normally closed state if the pressure in the fluid chamber 506 exceeds the pressure in the respective first and second chambers 650, 652 by less than or equal to 3 PSI, and will open if this pressure differential exceeds 3 PSI. Furthermore, it is assumed that the second and fourth fluid valves 512, 512' have a cracking pressure (pressure threshold) of 80 PSI, i.e. the second and fourth fluid valves 512, 512' will remain in their normally closed state unless the pressure in the fluid chamber 506 below or equal to 80 PSI, and will open if this pressure exceeds 80 PSI. Further still, it is assumed for purposes of illustration that optimal inflation pressure for both tires is 100 PSI. However, it is appreciated that these values may be altered according to the specifics and desired operation according to any given application.

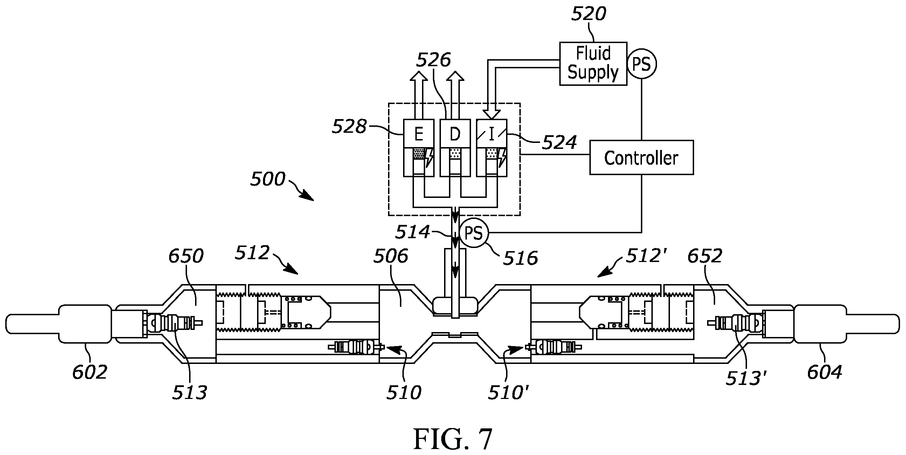

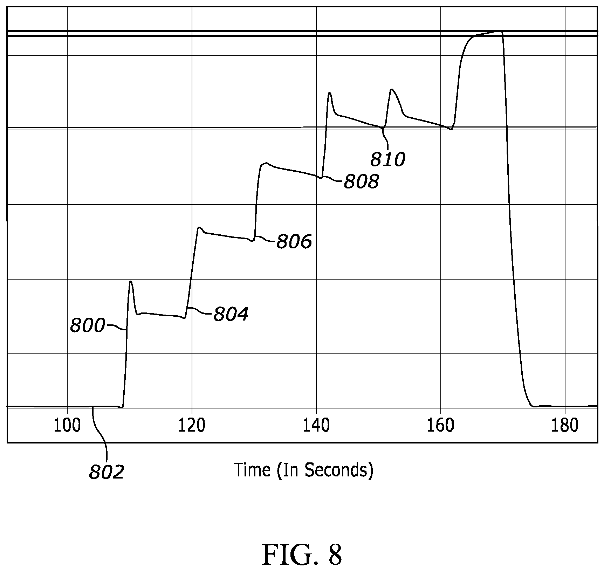

Reference is now made to Fig. 7, which shows a first phase of a status mode continuing from the setup mode illustrated in Fig. 6. As used herein, the status mode occurs whenever the tire inflation assembly 500 is operative, i.e., the system control valves 518 are operated by the controller 522, and monitoring the state of inflation of the respective tires to determine whether any action is required in response thereto. For purposes of illustration it is assumed, following the setup mode illustrated in Fig. 6, that the first chamber 650 is pressurized to 60 PSI whereas the second chamber 652 is pressurized to 90 PSI, reflecting that both the first and second tires in this example are underinflated, albeit not equally underinflated. As shown in Fig. 7, once energized/initiated, the tire inflation assembly 500 (e.g., via the system control valves 524, 526, 528 and the controller 522) will activate, and thereby close, the exhaust valve 528 (thereby isolating the fluid chamber 506 from ambient) while simultaneously activating, and thereby opening, the intake valve 524 in order to begin a pressure check routine using a pressure pulse strategy to identify the lowest pressure among some or all tires. An example of such a pulsing strategy is illustrated with reference to Fig. 8.

In particular, Fig. 8 illustrates a graph of a pressure curve 800 reflecting the pressure measured in the fluid supply conduit 514 by the fluid supply conduit pressure sensor 516. In this case, the horizontal or x-axis of the graph represents time in seconds whereas the vertical or y-axis of the graph represents the measured pressure in the fluid supply conduit 514 in PSI.

In general, the pulsing strategy comprises operating the intake valve 524 to provide comparatively short fluid pressure pulses from the fluid supply source 520 to the fluid supply conduit 514 and the fluid chamber 506 and thereafter measuring the pressure in the fluid supply conduit 514 at fixed intervals thereafter. In the illustrated example, each pressure pulse is approximately 1-2 seconds in length and the measurement interval is approximately 10 seconds, though it is appreciated that either or both of these parameters may be varied as a matter of design choice. For example, the pressure pulses may range as low as 0.1 seconds in length. When the pressure is measured subsequent to a given pulse, a determination is made whether the measured pressure has been repeated for at least two pulses.

The principal according to this strategy, given the pressure differential threshold of the first and third fluid valves 510, 510' (and assuming that measured pressures within the fluid supply conduit 514/fluid chamber 506 do not exceed the pressure thresholds of the second and fourth fluid valves 512, 512'), is that if the opening condition for either of the first and third fluid valves 510, 510' is not met (i.e., (P_line - P_tire) ≤ 3 PSI), then fluid communication with the respective tires has not been established and pressurized fluid in the fluid chamber 506 has not been supplied to either tire. Given this, a subsequent pressure pulse that results in a measured pressure higher than the previously measure pressure (due to a previous pressure pulse) means that the first and third fluid valve 510, 510' have remained closed despite the measured pressure within the fluid supply conduit 514/fluid chamber 506. On the other hand, if two successive pressure measurements following successive pressure pulses result in substantially equivalent pressures, it must be the case that one of the first and third fluid valves 510, 510' (or both) was opened at or near the measured pressure since the subsequent pressure pulse did not result in an increase in pressure within the fluid supply conduit 514/fluid chamber 506, i.e., fluid was able to flow into one or both of the respective tires via the first or third fluid valves 510, 510'.

Applying this strategy to the example shown in FIG. 8, beginning at about 110 seconds in the illustrated example, a first pressure pulse 802 is applied which raises the pressure to about 10 PSI as measured at approximately 120 seconds. A second pressure pulse 804 is then applied, which raises the measured pressure to about 25 PSI. Repeating this process, a third pressure pulse 806 raises the measured pressure to about 50 PSI and a fourth pressure pulse 808 raises the measured pressure to about 60 PSI. However, a fifth pressure pulse 810, applied at approximately 150 seconds, results in a subsequent pressure reading of also about 60 PSI. Once again, these substantially equal, successive pressure measurements give rise to the inference that one or both of the first and second fluid valves 510, 510' has opened and prevented further rise in measured pressures within the fluid supply conduit 514/fluid chamber 506. Thus, in this example, the determination has been made (via logic implemented by the controller 522) that one or both of the tires has a pressure of approximately 60 PSI.

Having determined that an initial pressure in at least one of the tires is below the optimal value, as well as below the pressure threshold of the second and fourth fluid valves 512, 512' (i.e., 80 PSI), the tire inflation assembly 500 may be operated in a "fast inflation" mode to bring the fluid pressure in the lowest inflated tire up to at least the pressure threshold of the second and fourth fluid valves 512, 512', which threshold delimits "fast inflation" operation from "slow inflation" operation as described in further detail below.

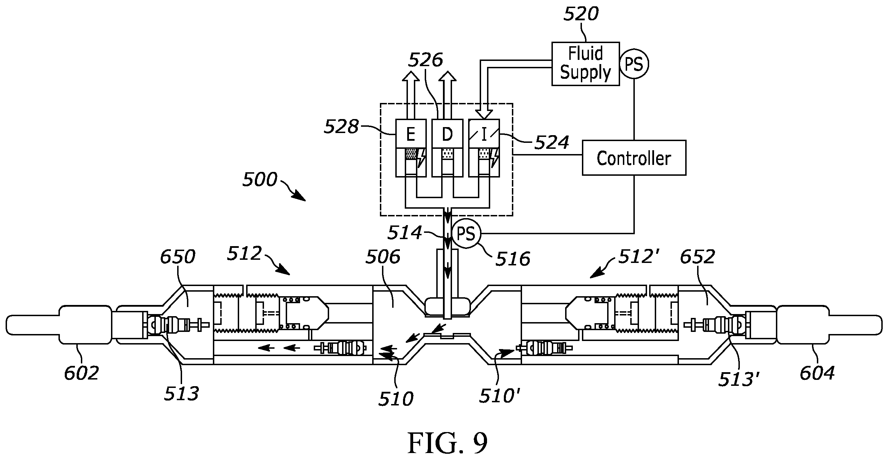

Referring now to Fig. 9, it is assumed that the first tire (i.e., the tire coupled via the first fluid connector 602) has an current pressure of 60 PSI and the second tire (i.e., the tire coupled to the second fluid connector 604) has a current pressure of 90 PSI. As shown, while the exhaust valve 528 remains activated (closed), the intake valve 524 is again controlled to supply pressurized fluid pulses to the fluid supply conduit 514/fluid chamber 506 with pressure measurements from the fluid supply conduit pressure sensor 516 subsequently obtained as described above. In this case, however, the length of each pressure pulse is increased as compared to pressure determination strategy described above. In particular, because the pressure in the fluid chamber 506 (P_line) is already approximately equal to the pressure in the first chamber 650 and first tire (P_tire), the pressure pulses applied during the fast inflation mode, if sufficiently long to pressurize the fluid chamber 506 as to meet the opening condition of the first fluid valve 510, i.e., (P_line - P_tire) > 3 PSI, the first fluid valve 510 will open and, as indicated by the small arrows in Fig. 9, fluid will flow through the first fluid valve 510 such that the pressure in both the tire and fluid chamber 506 will rise accordingly. Because the pathway through the first fluid valve 510 is relatively unrestricted, fluid flow during this process is relatively quick as compared to the "slow inflation" mode described below. This process is repeated until the measured pressure within the fluid supply conduit 514/fluid chamber 506 reaches the pressure threshold of the second and fourth fluid valves 512, 512', i.e., 80 PSI. As an added measure of control during the fast inflation mode, the quantity and time of each pressure pulse can be optimized based on the pressure delta in relation to the desired setpoint (i.e., the pressure threshold of the second and fourth fluid valves 512, 512'). For example, as the pressure difference between fluid chamber 506 and the defined setpoint is reduced, the pressure pulses may be made of shorter duration (i.e., the pulse durations are proportional to the difference in the fluid chamber 506 and the defined setpoint). In this manner, overinflation may be avoided, thereby obtaining more precise pressure control.

It is noted that, during the fast inflation mode illustrate in Fig. 9, no fluid from the fluid chamber 506 is able to flow to the second tire since the pressure in the second chamber 652 is higher, thereby ensuring that the third fluid valve 510' will not open. Likewise, because the pressure in the fluid chamber 506 remains below the pressure threshold of the fourth fluid valve 512', the fourth fluid valve 512' also remains closed.

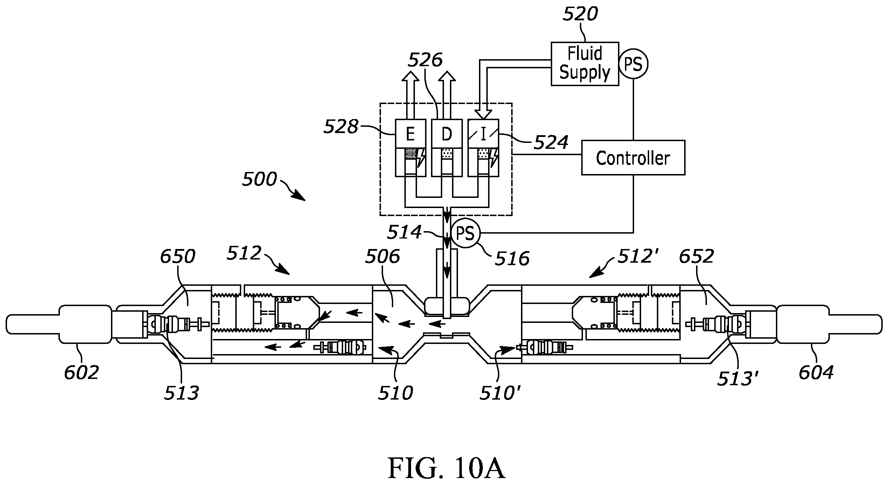

In an embodiment, at the conclusion of the fast inflation mode illustrated in Fig. 9, a "slow inflation" mode, as illustrated in Fig. 10A, can be initiated. The slow inflation mode is active when the pressure in the fluid supply conduit 514/fluid chamber 506 is at or greater than the pressure threshold of the second and fourth fluid valves 512, 512' (e.g., 80 PSI) yet still below the optimal tire pressure (e.g., 100 PSI). In the slow inflation mode, the strategy of applying short fluid pressure pulses through appropriate control of the inflation valve 524 is repeated. In an embodiment of this strategy, however, the pulses may be controlled to be comparatively short such that, while the pressure in the fluid chamber 506 is increased with each pulse, the amount of increased pressure is not so high as to cause the pressure differential threshold of either the first or third fluid valves 510, 510' to be met, e.g., the pressure differential is kept under 3 PSI. However, because the pressure in the fluid chamber 506 will be increased past the pressure threshold of the second and fourth fluid valves 512, 512', both of those valves will open as shown in FIG. 10A while the first and third fluid valves 510, 510' remain closed. As shown by the small arrows in Fig. 10A, and continuing with the previous example, this results in fluid flow from the fluid chamber 506 into the second bore comprising the second fluid valve 512, through the control orifice (now exposed to the second bore by virtue of opening of the second fluid valve 512), and finally through the first bore comprising the first fluid valve 510 and the first chamber 650, thereby inflating the first tire. Because the control orifice between the first and second bores is relatively narrow (or, with respect to the embodiment of Figs. 4A-4D, the pathway established between the sealing interface 436 and seal 438), it operates as a restriction and thereby permits only relatively slow filling of the first tire. In this manner, the slow inflation mode is able to provide more precise filing of tires thereby avoiding potential overinflation.

Note that, despite the fourth fluid valve 512' being open, fluid does not flow past the fourth fluid valve 512' and into the second tire because the pressure in the second tire (and, therefore, the second chamber 652) is, at this point, still higher than the pressure in the fluid chamber 506. However, the fourth fluid valve 512' being open permits equalization between the second tire and the first tire, i.e., so long as pressure in the second tire remains higher than the pressure in the first tire, fluid flow may occur from the second tire to the first tire via the fourth fluid valve 512' and the second fluid valve 512.

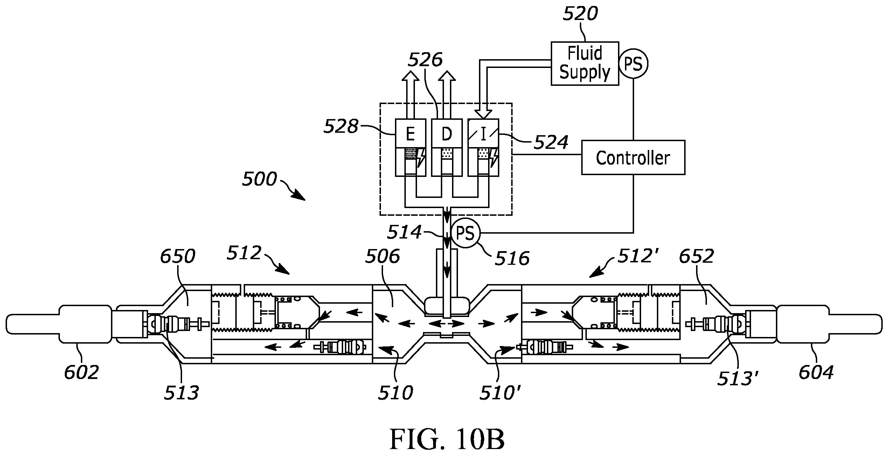

The process illustrated in FIG. 10A continues until such time that the pressure in the first and second tires is equalized, e.g., continuing with the previous example, at around 90 PSI. Thereafter, the slow inflation mode will continue as illustrated in FIG. 10B, whereby the continuing pressure pulses will cause fluid to flow past both the second and fourth fluid valves 512, 512' thereby continuing to inflate both the first and second tires. Once pressure within the fluid supply conduit 514/fluid chamber 506 reaches the optimal pressure, the slow inflation process will terminate with the controller 522 deenergizing/closing the inflation valve 524 while still maintaining the exhaust valve 529 in its energized/closed state.

Having inflated both tires to the desired setpoint following the slow inflation mode, the controller 522 will operate in the above-described status mode whereby pressure within the fluid supply conduit 514/fluid chamber 506 is continuously monitored via the fluid supply conduit pressure sensor 516. In this manner, the tire inflation system may react to any changes in the measured pressure, and various example scenarios of this are described in further detail below.

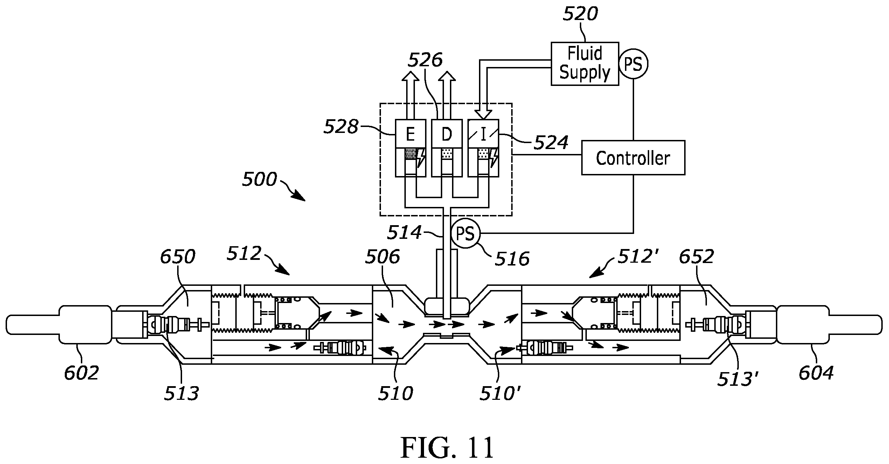

For example, due to driving conditions, assume that pressure increases are occurring in the first tire such that its inflation pressure rises above the optimal pressure of 100 PSI. Because the fluid chamber 506 is also at the 100 PSI pressure level, the second and fourth fluid valves 512, 512' remain open such that fluid communication between the first and second tires is possible. Thus, where the pressure in the first tire increases, fluid will flow from the first tire, through both the second and fourth fluid valves 512, 512' and into the second tire, thereby equalizing the pressures of the two tires, as depicted by the small arrows shown in Fig. 11. It is noted that no intervention is required by the controller 522 in order to achieve such equalization.

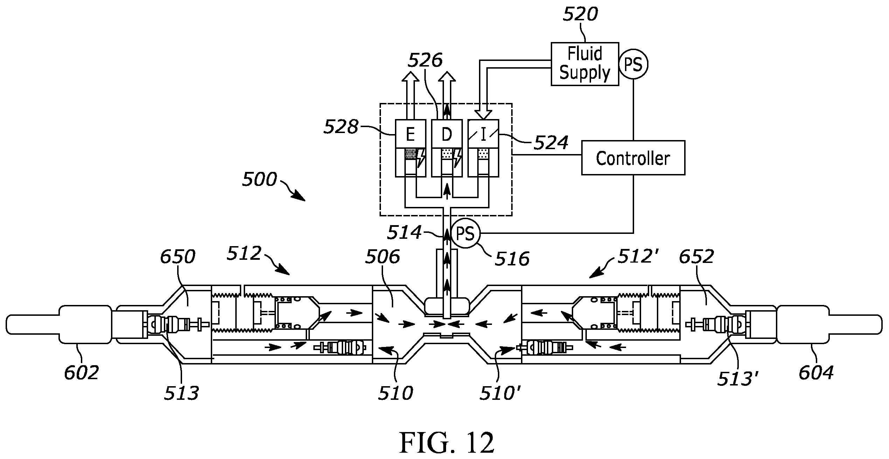

Should the increased pressurization of both tires continue, the continuous monitoring provided by the fluid supply conduit pressure sensor 516 will allow the controller 522 to determine if the pressure in the first and second tires has exceeded an upper inflation threshold, e.g., 110 PSI. If so, the controller 522 may initiate a "deflation" mode of operation, as illustrated in Fig. 12. In the deflation mode, the controller 522 energizes/opens the deflation valve 526 (while retaining the exhaust valve 528 in its energized/closed state) such that fluid in the fluid chamber 506 may flow through the fluid supply conduit 514 and the deflation valve 526 to ambient, as illustrated by the small arrows. In an embodiment, precise control over the deflation process may be maintained by opening the deflation valve 526 for a relatively short period and thereafter closing the deflation valve 526 and monitoring the pressure in the fluid supply conduit 514/fluid chamber 506. This process may be repeated as needed until the pressure in the fluid supply conduit 514/fluid chamber 506 once again reaches the optimal pressure. Thereafter, the controller 522 may once again return to the monitoring mode as described above.

In the event of a comparatively slow or medium leak (i.e., a leak or sum of multiple leaks that the system is capable of compensating for to maintain the desired target pressure) occurring in one of the tires, for example the second tire connected to the second fluid connector 694, the above-described equalization process as shown in Fig. 11 will occur. Thus, in this example, fluid will once again flow from the first tire, through the second and fourth fluid valves 512, 512' and into the second tire, as shown in Fig. 11. If the measured pressure in the fluid supply conduit 514/fluid chamber 506 falls sufficiently below the optimal pressure, but prior to reaching the pressure threshold of the second and fourth fluid valves 512, 512', the controller 522 may again enter the slow inflation mode whereby the inflation valve 524 provides pressure pulses to the fluid chamber 506 and into the tires in order to re-inflate the tires to the optimal pressure (or an increased version thereof, e.g., by 5-10%, to ensure proper operating condition of the tires notwithstanding the existence of the small/medium leak), or at least prevent further loss of pressure.

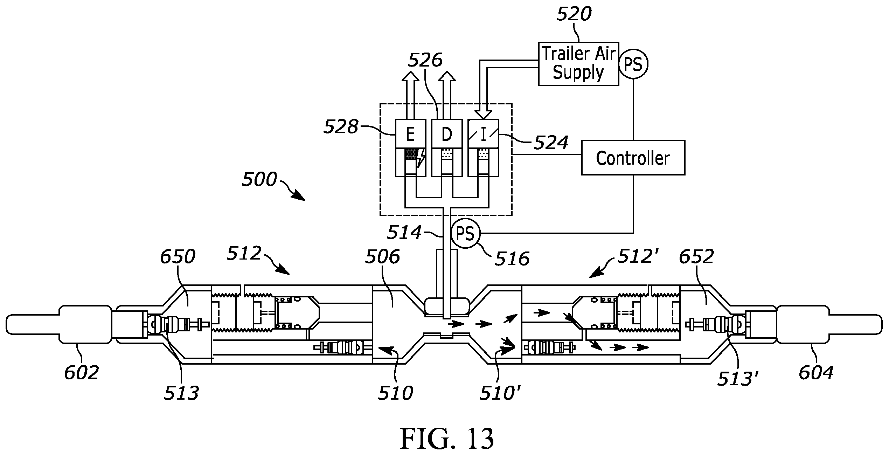

In the event of a large and/or rapid leak in one of the tires (i.e., a leak or sum of leaks that the system is unable to compensate for, such as a blowout), the tire inflation system may operate as illustrated in Fig. 13. In the illustration of Fig. 13, it is assumed that a blowout has occurred in tire 2, in which case the pressure in the second chamber 652 will rapidly drop as compared to the fluid chamber 506, which would still be at or near the optimal pressure. This will, in turn, cause fluid to quickly flow through both the third and fourth fluid valves 510', 512' as illustrated by the small arrows in Fig. 13. This rapid loss of pressure will continue until the pressure in the fluid chamber 506 reaches and starts to fall below the pressure threshold of the second and fourth fluid valves 512, 512', resulting in closure of both the second and fourth fluid valves 512, 512'. In this manner, the fluid pressure in the first tire will be protected from further loss that would otherwise result from the first tire attempting to equalize the loss of pressure in the second tire. In some implementations, the detection of the rapid pressure loss in the fluid chamber 506 will cause the controller 522 to de-energize (open) the exhaust valve 528, thereby depressurizing the fluid chamber 506 entirely. Doing so may prevent the fluid supply conduit 514 from being pressurized by another blocked valve or a different failure mode that could otherwise cause unwanted pressure in the system.

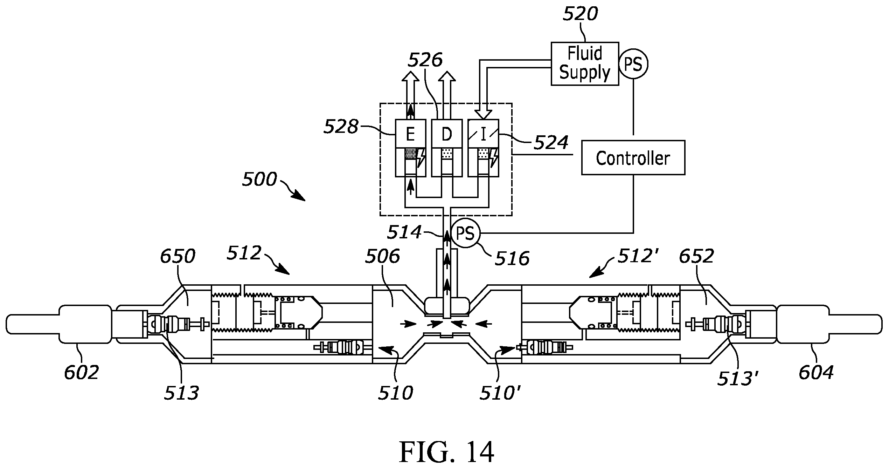

Referring now to Fig. 14, an example scenario 1200 of a shutdown mode is shown. In the example, it is assumed that the vehicle is parked or disconnected. In this case, the fluid supply conduit 514 should be depressurized quickly in order to cause rapid closure of the equalization valves (i.e., the second and fourth fluid valves 512, 512'), thus protecting the pressure in all tires. With the vehicle is parked and turned off, the system may be de-energized, thereby causing the exhaust valve 528 to open and rapidly depressurizing the fluid chamber 506.

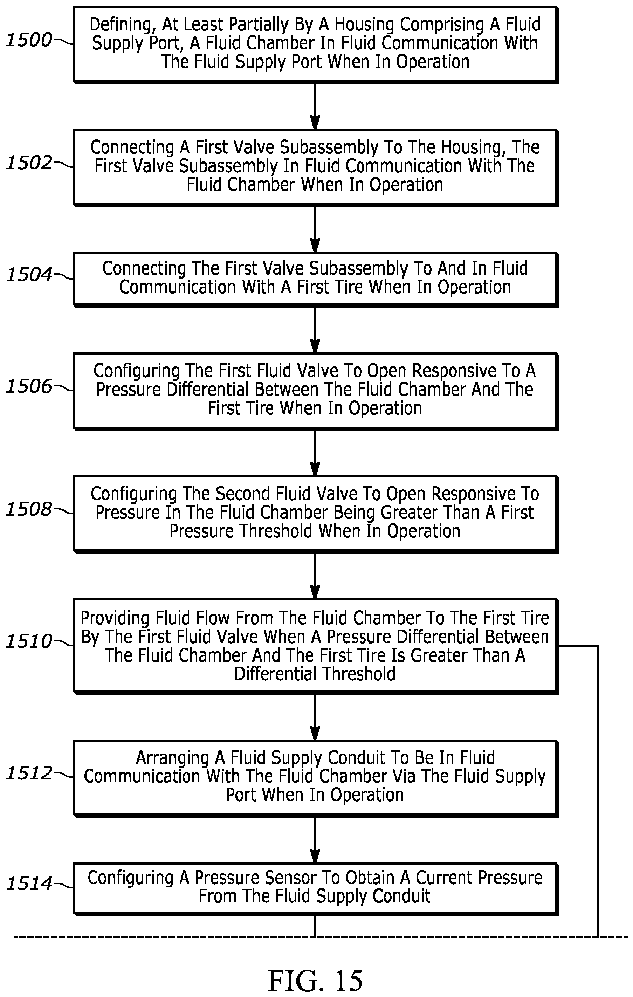

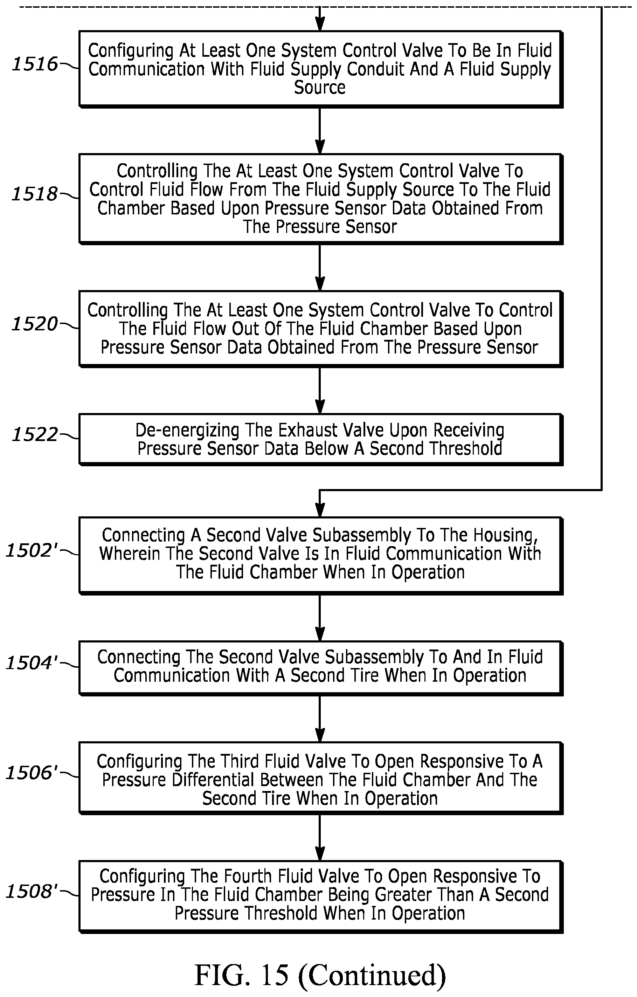

Referring also at least to the example implementation of Fig. 15, an example flowchart for use in manufacturing and operating a tire inflation system described throughout is shown. For example, blocks 1500, 1502, 1506, 1508, 1512, 1514, 1516, 1502', 1506' and 1508' collectively or sub-groups thereof may be considered as defining one or more manufacturing methods. Regardless, beginning at box 1500, in some implementations, a fluid chamber may be defined at least partially by a housing comprising a fluid supply port in fluid communication with the fluid supply port when in operation. At box 1502, in some implementations, a first valve subassembly may be connected to the housing, the first valve subassembly in fluid communication with the fluid chamber when in operation. At box 1504, in some implementations, the first valve subassembly may be connected to and in fluid communication with a first tire when in operation, wherein the first valve subassembly may include a first fluid valve and a second fluid valve each disposed between and in fluid communication with the fluid chamber and with the first tire when in operation. At box 1506, in some implementations, the first fluid valve may be configured to open responsive to a pressure differential between the fluid chamber and the first tire when in operation. At box 1508, in some implementations, the second fluid valve may be configured to open responsive to pressure in the fluid chamber being greater than a first pressure threshold when in operation.

At box 1510, in some implementations, fluid flow may be provided from the fluid chamber to the first tire by the first fluid valve when a pressure differential between the fluid chamber and the first tire is greater than a differential threshold. At box 1502', in some implementations, a second valve subassembly may be connected to the housing, wherein the second valve subassembly may be in fluid communication with the fluid chamber when in operation. At box 1504', in some implementations, the second valve subassembly may be connected to and be in fluid communication with a second tire when in operation, wherein the second valve subassembly may include a third fluid valve and a fourth fluid valve each disposed between and in fluid communication with the fluid chamber and with the second tire when in operation. At box 1506', in some implementations, the third fluid valve may be configured to open responsive to a pressure differential between the fluid chamber and the second tire when in operation. At box 1508', in some implementations, the fourth fluid valve may be configured to open responsive to pressure in the fluid chamber being greater than a second pressure threshold when in operation.

At box 1512, in some implementations, a fluid supply conduit may be arranged to be in fluid communication with the fluid chamber via the fluid supply port when in operation. At box 1514, in some implementations, a pressure sensor may be configured to obtain a current pressure from the fluid supply conduit. At box 1516, in some implementations, at least one system control valve may be configured to be in fluid communication with the fluid supply conduit and a fluid supply source. At box 1518, in some implementations, the at least one system control valve may be controlled to control fluid flow from the fluid supply source to the fluid chamber based upon pressure sensor data obtained from the pressure sensor. At box 1520, in some implementations, the at least one system control valve may be configured to control the fluid flow out of the fluid chamber based upon pressure sensor data obtained from the pressure sensor. At box 1522, in some implementations, the exhaust valve may be de-energized upon receiving pressure sensor data below a second threshold.

It will be appreciated after reading the present disclosure that any standard equipment and/or manufacturing processes may be used singly or in any combination with the processes of the present disclosure. For example, CNC machines, forging equipment, heat treatment furnaces, grinding machines, drilling/boring machines, threading machines, welding equipment, etc. may be used. In one or more example implementations, the respective equipment, flowcharts and/or processes described herein may be manually implemented, computer-implemented, or a combination thereof.

In some implementations, the flowchart and block diagrams in the figures illustrate the architecture, functionality, and operation of possible implementations of apparatus (systems), methods according to various implementations of the present disclosure. It should be noted that, in some implementations, the functions noted in the block(s) may occur out of the order noted in the figures (or combined or omitted). For example, two blocks shown in succession may, in fact, be executed substantially concurrently, or the blocks may sometimes be executed in the reverse order, depending upon the functionality involved.

The terminology used herein is for the purpose of describing particular implementations only and is not intended to be limiting of the disclosure. As used herein, the singular forms "a", "an" and "the" are intended to include the plural forms as well, including any steps performed by a/the computer/processor, unless the context clearly indicates otherwise. As used herein, the phrase "at least one of A, B, and C" should be construed to mean a logical (A OR B OR C), using a non-exclusive logical OR, and should not be construed to mean "at least one of A, at least one of B, and at least one of C." As another example, the language "at least one of A and B" (and the like) as well as "at least one of A or B" (and the like) should be interpreted as covering only A, only B, or both A and B, unless the context clearly indicates otherwise. It will be further understood that the terms "comprises" and/or "comprising," when used in this specification, specify the presence of stated features, integers, steps (not necessarily in a particular order), operations, elements, and/or components, but do not preclude the presence or addition of one or more other features, integers, steps (not necessarily in a particular order), operations, elements, components, and/or groups thereof. Example sizes/models/values/ranges can have been given, although examples are not limited to the same.

The terms (and those similar to) "coupled," "attached," "connected," "adjoining," "transmitting," "communicating," "receiving," "connected," "engaged," "adjacent," "next to," "on top of," "above," "below," "abutting," and "disposed," used herein is to refer to any type of relationship, direct or indirect, between the components in question, and may apply to electrical, mechanical, fluid, optical, electromagnetic, electromechanical or other connections, including logical connections via intermediate components (e.g., device A may be coupled to device C via device B). Additionally, the terms "first," "second," etc. are used herein only to facilitate discussion, and carry no particular temporal or chronological significance unless otherwise indicated.

The corresponding structures, materials, acts, and equivalents (e.g., of all means or step plus function elements) that may be in the claims below are intended to include any structure, material, or act for performing the function in combination with other claimed elements as specifically claimed. While the disclosure describes structures corresponding to claimed elements, those elements do not necessarily invoke a means plus function interpretation unless they explicitly use the signifier "means for." Unless otherwise indicated, recitations of ranges of values are merely intended to serve as a shorthand way of referring individually to each separate value falling within the range, and each separate value is hereby incorporated into the specification as if it were individually recited. While the drawings divide elements of the disclosure into different functional blocks or action blocks, these divisions are for illustration only. According to the principles of the present disclosure, functionality can be combined in other ways such that some or all functionality from multiple separately depicted blocks can be implemented in a single functional block; similarly, functionality depicted in a single block may be separated into multiple blocks. Unless explicitly stated as mutually exclusive, features depicted in different drawings can be combined consistent with the principles of the present disclosure. Moreover, although this disclosure describes and depicts respective implementations herein as including particular components, elements, feature, functions, operations, or steps (and arrangements thereof), any of these implementations may include any combination, arrangement, or permutation of any of the components, elements, features, functions, operations, or steps described or depicted anywhere herein that a person having ordinary skill in the art would comprehend after reading the present disclosure. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

The description of the present disclosure has been presented for purposes of illustration and description but is not intended to be exhaustive or limited to the disclosure in the form disclosed. After reading the present disclosure, many modifications, variations, substitutions, and any combinations thereof will be apparent to those of ordinary skill in the art without departing from the scope and spirit of the disclosure. The implementation(s) were chosen and described to explain the principles of the disclosure and the practical application, and to enable others of ordinary skill in the art to understand the disclosure for various implementation(s) with various modifications and/or any combinations of implementation(s) as are suited to the particular use contemplated. The features of any dependent claim may be combined with the features of any of the independent claims or other dependent claims.

Having thus described the disclosure of the present application in detail and by reference to implementation(s) thereof, it will be apparent that modifications, variations, and any combinations of implementation(s) (including any modifications, variations, substitutions, and combinations thereof) are possible without departing from the scope of the disclosure defined in the appended claims.

## Claims

1. A tire inflation assembly for operative connection to a fluid supply source and associated with at least a first tire, the tire inflation assembly comprising:
a housing comprising a fluid supply port and at least partially defining a fluid chamber in fluid communication with the fluid supply port; and
a first valve subassembly operatively connected to the housing and in fluid communication with the fluid chamber, the first valve subassembly configured to be operatively connected to and in fluid communication with the first tire;
wherein the first valve subassembly comprises a first fluid valve and a second fluid valve each disposed between and in fluid communication with the fluid chamber and with the first tire,
and wherein the first fluid valve is configured to open responsive to a pressure differential between the fluid chamber and the first tire, and the second fluid valve is configured to open responsive to pressure in the fluid chamber being greater than a first pressure threshold.

2. The tire inflation assembly of claim 1, wherein fluid flow from the fluid chamber to the first tire is provided by the first fluid valve when the pressure differential between the fluid chamber and the first tire is greater than a differential threshold.

3. The tire inflation assembly of claim 1 or claim 2, wherein a longitudinal axis of the first fluid valve is substantially parallel to a longitudinal axis of the second fluid valve, optionally wherein the first fluid valve and the second fluid valve are concentric, optionally wherein the first fluid valve is deployed at least partially within the second fluid valve.

4. A tire inflation system comprising:
the tire inflation assembly of any previous claim;
a fluid supply conduit in fluid communication with the fluid chamber via the fluid supply port;
a pressure sensor in fluid communication with the fluid supply conduit;
at least one system control valve in fluid communication with the fluid supply conduit and the fluid supply source; and
a controller operatively connected to the at least one system control valve and configured to control, via the at least one system control valve, fluid flow from the fluid supply source to the fluid chamber, and fluid flow out of the fluid chamber, based upon pressure sensor data received from the pressure sensor.

5. The tire inflation system of claim 4 for use with a second tire, further comprising:
a second valve subassembly operatively connected to the housing and in fluid communication with the fluid chamber, the second valve subassembly configured to be operatively connected to and in fluid communication with the second tire;
wherein the second valve subassembly comprises a third fluid valve and a fourth fluid valve each disposed between and in fluid communication with the fluid chamber and with the second tire,
and wherein the third fluid valve is configured to open responsive to a pressure differential between the fluid chamber and the second tire, and the fourth fluid valve is configured to open responsive to pressure in the fluid chamber being greater than a second pressure threshold.

6. The tire inflation system of claim 5, wherein the at least one system control valve comprises an inflation valve disposed between the fluid supply source and the fluid supply conduit.

7. The tire inflation system of claim 5, wherein the at least one system control valve comprises an exhaust valve disposed between the fluid supply conduit and ambient, optionally wherein the exhaust valve is configured to de-energize upon receiving pressure sensor data below a second threshold.

8. The tire inflation system of claim 5, wherein the at least one system control valve comprises a deflation valve disposed between the fluid supply conduit and ambient.

9. A valve subassembly for use in a tire inflation assembly associated with a tire and having a fluid chamber configured to receive fluid from a fluid supply source, the valve sub-assembly comprising:
a first fluid valve; and
a second fluid valve,
wherein both the first fluid valve and the second fluid valve are disposed between and in fluid communication with the fluid chamber and with the tire,
and wherein the first fluid valve is configured to open responsive to a pressure differential between the fluid chamber and the tire, and the second fluid valve is configured to open responsive to pressure in the fluid chamber being greater than a first pressure threshold.

10. The valve subassembly of claim 9, wherein fluid flow from the fluid chamber to the first tire is provided by the first fluid valve when the pressure differential between the fluid chamber and the first tire is greater than a differential threshold.

11. The valve subassembly of claim 9, wherein a longitudinal axis of the first fluid valve is substantially parallel to a longitudinal axis of the second fluid valve, optionally wherein the first fluid valve and the second fluid valve are concentric, optionally wherein the first fluid valve is deployed at least partially within the second fluid valve.

12. A method for manufacturing a tire inflation assembly for operative connection to a fluid supply source and to be associated with at least a first tire when in operation, the method comprising:
defining, at least partially by a housing comprising a fluid supply port, a fluid chamber in fluid communication with the fluid supply port when in operation;
connecting a first valve subassembly to the housing, the first valve subassembly in fluid communication with the fluid chamber when in operation, and the first valve subassembly comprising a first fluid valve and a second fluid valve each disposed between and in fluid communication with the fluid chamber and with the first tire when in operation;
configuring the first fluid valve to open responsive to a pressure differential between the fluid chamber and the first tire when in operation; and
configuring the second fluid valve to open responsive to pressure in the fluid chamber being greater than a first pressure threshold when in operation.

13. A method of manufacturing a tire inflation system comprising:
manufacturing a tire inflation assembly in accordance with the method of claim 12;
arranging a fluid supply conduit to be in fluid communication with the fluid chamber via the fluid supply port when in operation;
configuring a pressure sensor to obtain a current pressure from the fluid supply conduit when in operation;
configuring at least one system control valve to be in fluid communication with the fluid supply conduit and the fluid supply source.

14. The method of claim 13, further comprising:
connecting a second valve subassembly to the housing, wherein the second valve subassembly is in fluid communication with the fluid chamber when in operation, and the second valve subassembly comprising a third fluid valve and a fourth fluid valve each disposed between and in fluid communication with the fluid chamber and with a second tire when in operation;
configuring the third fluid valve to open responsive to a pressure differential between the fluid chamber and the second tire when in operation; and
configuring the fourth fluid valve to open responsive to pressure in the fluid chamber being greater than a second pressure threshold when in operation.

15. The method of claim 13, wherein configuring the at least one system control valve comprises arranging an inflation valve between the fluid supply source and the fluid supply conduit; or
wherein configuring the at least one system control valve comprises arranging an exhaust valve between the fluid supply conduit and ambient; or
wherein configuring the at least one system control valve comprises arranging a deflation valve between the fluid supply conduit and ambient.
